# EUROPÄISCHE PATENTANMELDUNG

(11) **EP 2 256 353 A2**
(43) Veröffentlichungstag der Anmeldung: **01.12.2010**
(21) Anmeldenummer: 10005437.8
(22) Anmeldetag: 26.05.2010
(51) Int. Cl.: F16B 7/04, F24J 2/52

(54) **Klemmverbindung für Modulschienen bei Photovoltaikanlagen**

(30) Priorität: 28.05.2009 DE 102009023021
(71) Anmelder: Adensis GmbH, 01129 Dresden (DE)
(72) Erfinder: Beck, Bernhard, 97332 Volkach OT Dimbach (DE); Zeißner, Sven, 97506 Grafenrheinfeld (DE); Jurchen, Michael, 97265 Hettstadt (DE); Jerichow, Stephan, 14532 Kleinmachnow (DE)

(57) **Zusammenfassung**

Eine Klemmverbindung umfasst einen hakenförmigen Ansatz (15), der in eine hakenförmige Schulter (9,11) einklinkbar ist. An der ansonsten ebenen Unterseite (17) der Klammer (13) verläuft ein nach unten gerichteter Steg (19). Der hakenförmige Ansatz (15) verläuft an der dem Steg (19) gegenüberliegenden Seite auf einer vorgegebenen Höhe (h) an ihrer senkrecht zur Unterseite (17) verlaufenden Seitenfläche (14) entlang. Die Seitenfläche (14) ragt über den hakenförmigen Ansatz (15) hinaus. Eine Variante umfasst eine zweiteilige Klammer (13a, 13b). Vorteil der Anordnung ist die Montagemöglichkeit einer Modulschiene (3) für Photovoltaikmodule an einer Trägerschiene (1) mit nur einer einzigen Schraube (23) bei einer gleichzeitigen stabilen Verbindung, die hohen Drehmomenten widersteht.

## Beschreibung

Die Erfindung bezieht sich auf eine Klemmverbindung zur insbesondere rechtwinkeligen Verbindung einer Modulschiene für Photovoltaikmodule mit einer Trägerschiene, wobei die Trägerschiene auf ihrer Oberseite eine T-Nut aufweist, und wobei die Modulschiene eine zur Auflage auf die Trägerschiene vorgesehene Basisplatte aufweist, an deren zumindest einem Rand eine den Rand entlanglaufende, insbesondere hakenförmige Schulter ausgebildet ist, **dadurch gekennzeichnet, dass** die Klemmverbindung mittels einer einzigen Schraube, die am oberen Ende frei zugänglich ist und am unteren Ende mit einem in die T-Nut eingreifenden Nutstein versehen ist, in Zusammenwirkung mit einem Klammerteil, das einen als Gegenhaken zur Schulter fungierenden hakenförmigen Ansatz aufweist, der an der Schulter kraftschlüsssig anbringbar ist, die Modulschiene auf der Trägerschiene fixiert. Die Erfindung bezieht sich weiterhin auf eine Klammer, die obige Klemmverbindung bewerkstelligt.

Eine Modulklemme der genannten Art ist aus der EP 2009293 bekannt. Dort ist eine Modulschiene beschrieben, die auf eine Basisfläche, die auch Teil einer anderen Schiene sein kann, in Zusammenwirken mit einem Keil, der auf einer Rampe verschiebbar ist, verklemmt wird. Der Keil wird mittels einer einzigen Schraube verschoben. Nachteilig bei der bekannten Anordnung ist es, dass nur ein Teil des zur Verfügung stehenden Hebelarms für ein Auffangen von einwirkenden Dreh- und Kippmomente genutzt wird.

Modul- und Trägerschienen sind an sich bekannt und werden bei Photovoltaikanlage eingesetzt, um die Möglichkeit zu schaffen, Photovoltaikmodule nebeneinander und übereinander als Feld anzuordnen. Die einzelnen Module werden dann mittels Modulklemmen, die nicht Gegenstand dieser Anmeldung sind, auf den Modulschienen befestigt.

Klassischer Weise wird als Modulschiene ein Profil verwendet, welches in Schienenrichtung gesehen an seinen Seitenflanken beidseitig gespannt wird. Es gibt z. Zt. verschiedene Varianten, wie die Modulschiene mit der Trägerschiene verbunden wird. Eine bekannte Ausführung sieht vor, das links und rechts Klauen in die Seitenflanken eingreifen. Eine andere Variante sieht eine Verbindung mittels eines Z- förmigen Verbinders vor. Bei allen bekannten Ausführungen sind zwei Schrauben nötig, um eine Klemmverbindung zu realisieren. Dazu ist es firmeninterner Stand der Technik, die Modulschiene an jedem Befestigungspunkt mit der Trägerschiene mittels zweier Klammern zu halten. Dazu weist die Modulschiene an beiden Seiten je eine einen Haken bildende Schulter auf, in welche jeweils eine Klammer mit entsprechendem Gegenhaken eingeklinkt werden kann. Die Klammer hat eine Bohrung durch welche eine Schraube geführt ist, an deren Ende ein Nutstein befestigt ist. Die Klammer mit Schraube und Nutstein wird innerhalb einer T-Nut an der Oberseite der Trägerschiene so weit zur Modulschiene hin verschoben, dass der Gegenhaken über dem Haken zu liegen kommt. Dann wird die Klammer abgesenkt, wodurch der Haken und der Gegenhaken kraftschlüssig ineinander eingreifen. In diesem Zustand wird dann die Klammer mittels des Nutsteins in der Trägerschiene fixiert. Wie oben erwähnt, muss dieser Arbeitsgang zweimal pro Klemmverbindung ausgeführt werden.

Der vorliegenden Erfindung liegt die Aufgabe zugrunde, den Montageaufwand der Modulschienen auf den Trägerschienen zu verringern. Dabei geht die Erfindung von der Überlegung aus, dass eine Modifizierung der Klammer derart erfolgen sollte, dass nur noch eine Schraube pro Klemmverbindung erforderlich ist, die Modulschiene aber trotzdem über eine gesamte Seitenhöhe oder von zwei Seiten formschlüssig gehalten oder abgestützt wird. Dabei hat es sich in Versuchen als zweckmäßig herausgestellt, wenn zusätzlich zum Kraftschluss auch noch ein Formschluss gegeben ist.

Bezüglich der Klemmverbindung wird diese Aufgabe erfindungsgemäß dadurch gelöst, dass der Klammerteil einen Klemmeffekt über eine gesamte Seite der Modulschiene bereitstellt. Durch diese Maßnahme wird in zumindest einer Verdreh- oder Kipprichtung der Modulschiene in Bezug zur Trägerschiene ein Hebelarm zum Auffangen der Drehkraft bereitgestellt, der im Wesentlichen der gesamten Höhe der Seite entspricht.

Eine vorteilhafte erste Ausführungsform sieht vor, dass das Klammerteil eine zur T-Nut hin gerichtete, rechteckförmige Unterseite hat, an deren einem Rand ein nach unten gerichteter Steg verläuft und an deren dem Steg gegenüberliegenden Seite auf einer vorgegebenen Höhe der Seitenfläche entlang der hakenförmige Ansatz verläuft. Dabei ist der Steg dazu vorgesehen, eine Federwirkung oder besser einen Spannweg bereitzustellen. Die bis auf den Steg ebene Unterseite des Klammerteils biegt sich je nach verwendetem Material auch elastisch nach unten durch, wenn die Schraube angezogen wird. Der Steg dient dabei als Stützlager, das an der Trägerschiene anliegt. Je nach Wahl der vorgegebenen Höhe kann diese Wirkung verstärkt werden. Ist die Höhe so gewählt, dass bei vollständigem Ineinandergreifen von Haken und Gegenhaken der Rand des Klammerteils, der unterhalb des hakenförmigen Ansatzes oder Gegenhakens liegt, nicht zum Anliegen an die Trägerschiene kommt, wird im Ergebnis ein weiterer Abstandshalter bereitgestellt, der ebenfalls einen Federweg oder Spannweg bildet. Dieses wird nochmals anhand der Figuren deutlich.

Zur Erhöhung der Stabilität gegen ein Verkippen aufgrund der einseitigen Klammerbefestigung ist es vorgesehen, dass die Seitenfläche senkrecht zu der Oberseite der Trägerschiene verläuft und über den hakenförmigen Ansatz hinausreicht. Dann steht einem Verkippen noch die Kraft entgegen, die benötigt wird um den hinausreichenden teil der Seitenfläche des Klammerteils zu verbiegen. Eine Materialverdickung derart, dass der, die Seitenfläche bildende Teil der Klammerverbindung an seiner der Seitenfläche gegenüberliegenden Seite schräg nach unten zur rechteckförmigen Unterseite hin verstärkt ausgeführt ist, erhöht diesen Kippschutzeffekt.

Das Klammerteil weist eine vorzugsweise rechteckförmige Unterseite auf, in welche ein mittig gelegenes Loch zur Durchführung der einzigen Schraube eingebracht ist. Die mittige Lage des Lochs ist nicht zwingend, verteilt aber den zuvor erwähnten Spannungs- oder Federeffekt gleichmäßig über den Steg und ggf. die Haken/Gegenhaken - Verbindung. Ebenso wäre eine andere Grundform als rechteckig möglich, wie z.B. rund oder halbrund.

Eine zweite vorteilhafte Ausführungsform sieht bei einer Modulschiene mit an den beiden gegenüberliegenden Rändern der Basisplatte befindlichen erster bzw. zweiter hakenförmiger Schulter vor, dass die Klemmverbindung mittels zweier Teile zweiseitig klemmend ausgebildet ist, wobei
- das erste Teil einen Basisstreifen darstellt, auf den die Modulschiene quer zur Streifenrichtung montierbar ist, und der an einem Ende an seiner Unterseite mit einem hammerkopfartigen Steg zum Eingriff in die T-Nut der Trägerschiene und an der dem Steg gegenüberliegenden Oberseite mit dem ersten Gegenhaken versehen ist, und der an seinem anderen Ende mit einer länglichen Aussparung versehen ist, und
- das zweite Teil ein Klammerteil darstellt, das einen zweiten Gegenhaken aufweist, der an dem zweiten Ansatz kraftschlüssig anbringbar ist,
wobei das zweite Teil ein Loch zur Durchführung der einzigen Schraube aufweist, und entlang der Aussparung verschiebbar angeordnet ist.

Bei dieser Ausführungsform wird zu Lasten des Materialeinsatzes eine Klemmwirkung an beiden Rändern der Modulschiene erzielt, was die Stabilität weiter erhöht. Die Modulschiene liegt dann nicht mehr unmittelbar auf der Trägerschiene auf, sondern auf dem streifenförmigen ersten Teil. Eventuell auf die ersten Haken/Gegenhaken einwirkende Kräfte werden über den Streifen umgelenkt auf die andere Seite und von der einzigen Schraubenverbindung abgefangen. An dieser Stelle soll erwähnt werden, das die Termini "Schraube", "Schraubenverbindung" etc. als Synonym für jegliche wieder lösbare Verbindung zu betrachten sind, die geeignet ist, vorliegende Aufgaben zu erfüllen. Wichtig ist, dass immer nur eine Einzige dieser Verbindungen vorgesehen ist.

Die Aussparung ist vorzugsweise als Langloch ausgeführt, welches in Streifenrichtung verläuft. Dadurch können das erste und das zweite Teil der Klemmverbindung komplett vormontiert werden, sodass nur noch vom Monteur nach Einbringen der Klaue in die Nut, die Schraube angezogen werden muss. Es ist bekannt, dass Montagearbeiten auf der Baustelle vor Ort teurer sind, als in einer Fabrikationshalle, wo keine Witterungseinflüsse und eine beobachtete Umgebung vorliegen, so dass z.B. bei Defekt eines Werkzeugs rasch gehandelt werden kann. Die Vormontage ist soweit möglich, dass beide Teile über die Schraube miteinander lose verbunden sind. Auf der Baustelle ist dann lediglich noch das erste Teil und der Nutstein des zweiten Teils in die T-Nut einzufädeln, die jeweiligen hakenförmigen Ansätze auf die hakenförmigen Schultern der Modulschiene auszurichten und die Schraube anzuziehen.

Als Klammerteil oder zweites Teil kann dabei die erste Ausführungsform herangezogen werden, zusammen mit ihren vorteilhaften Ausgestaltungen wie:
i) Das Klammerteil hat eine zur T-Nut hin gerichtete, rechteckförmige Unterseite, die an einem der Ränder einen nach unten gerichteten Steg aufweist;
ii) Am Klammerteil verläuft an seiner dem Steg abgewandten Seite auf einer vorgegebenen Höhe der Seitenfläche entlang der hakenförmige Ansatz;

Da die einwirkenden Kräfte, wie z.B. Gewicht, Schneelast, Windlast etc. über die T-Nut-Verbindung auf die Trägerschiene und von dort auf ein nicht weiter besprochenes Traggerüst, Dachhaut usw. abgeleitet werden, ist es sinnvoll, dass die T-Nut(en) an ihren die schlitzförmige Öffnung bildenden Rändern mit einem Verstärkungssteg versehen ist(sind).

Zur weiteren Vereinfachung der Montage durch den Einsatz weniger unterschiedlicher Bauteile, ist es vorteilhaft, wenn die Modulschiene und die Trägerschiene identisch ausgeführt sind. Dabei kann eine variantenreiche Ausführung vorteilhaft sein, bei der die Modulschiene und die Trägerschiene rechteckförmig sind und die T-Nut in einer Grundfläche verläuft und je eine weitere T-Nut gleichen Querschnitts entlang den Seitenflächen verläuft.

Zur Lösung der Aufgabe ist die Anmeldung weiterhin auf die Klammern selber gerichtet, deren erste Ausführungsform sich dadurch auszeichnet, dass die Klammer
- einen hakenförmigen Ansatz aufweist, der in eine hakenförmige Schulter einhakbar ist,
- an ihrer ansonsten ebenen Unterseite ein nach unten gerichteter Steg verläuft, und der hakenförmiger Ansatz an der dem Steg gegenüberliegenden Seite auf einer vorgegebenen Höhe ihrer senkrecht zur Unterseite verlaufenden Seitenfläche entlang verläuft, und dass
- die Seitenfläche über den hakenförmigen Ansatz hinausreicht; und
deren zweite Ausführungsform sich dadurch auszeichnet, dass die Klammer zweiteilig ausgebildet ist, wobei
- das erste Teil einen Basisstreifen darstellt, auf den die Modulschiene quer zur Streifenrichtung montierbar ist, und der an einem Ende an seiner Unterseite mittels eines hammerkopfartigen Stegs zum Eingriff in eine T-Nut geeignet ist und an der dem Steg gegenüberliegenden Oberseite mit einem ersten hakenförmigen Ansatz zum formschlüssigen Eingriff in eine erste hakenförmige Schulter versehen ist, und der an seinem anderen Ende mit einer länglichen Aussparung versehen ist, und
- das zweite Teil ein Klammerteil darstellt, das einen zweiten hakenförmigen Ansatz zum kraftschlüssigen Eingriff in eine zweite hakenförmige Schulter aufweist,
wobei das zweite Teil ein Loch zur Durchführung der einzigen Schraube aufweist, und entlang der Aussparung verschiebbar angeordnet ist.

Die jeweiligen Vorteile der Klammern sind bereits im Rahmen der Klemmverbindung diskutiert worden. So verbleibt lediglich zu erwähnen, dass die Klammern oder bei der zweiteiligen Ausführungsform ihre beiden Teile jeweils einstückig ausgebildet sind. Dies kann dann je nach verwendetem Material ein Frästeil, ein Gussteil, ein kombiniertes Fräs/Stanzteil oder strangepresstes Aluprofil sein.

Weitere Vorteile und Ausgestaltungen der Erfindung ergeben sich aus der Beschreibung eines Ausführungsbeispiels anhand der Figuren und der eingereichten Modelle. Es zeigen:
- Figur 1a: Einen Querschnitt durch eine erste Variante einer Profilleiste zur Verwendung als Träger- oder Modulschiene,
- Figur 1b: einen Querschnitt durch eine zweite Variante einer Profilleiste zur Verwendung als Träger- oder Modulschiene,
- Figur 2: eine Aufsicht auf eine Kreuzverbindung Modul/Trägerschiene mit Klammer nach einer ersten Ausführungsform,
- Figur 3: einen Schnitt entlang der Linie III-III der Figur 2
- Figur 4: einen Querschnitt durch eine Klemmverbindung gemäß einer zweiten Ausführungsform der Erfindung mit zweiteiliger Klammer,
- Figur 4a: eine erste Detailansicht aus der Figur 4,
- Figur 4b: eine zweite Detailansicht aus der Figur 4,
- Figur 5: einen Querschnitt entsprechend Figur 3 bei Verwendung einer anderer Profilleiste, und
- Figur 6: eine weitere Ausführungsform mit einer vereinfachten Modulschiene.

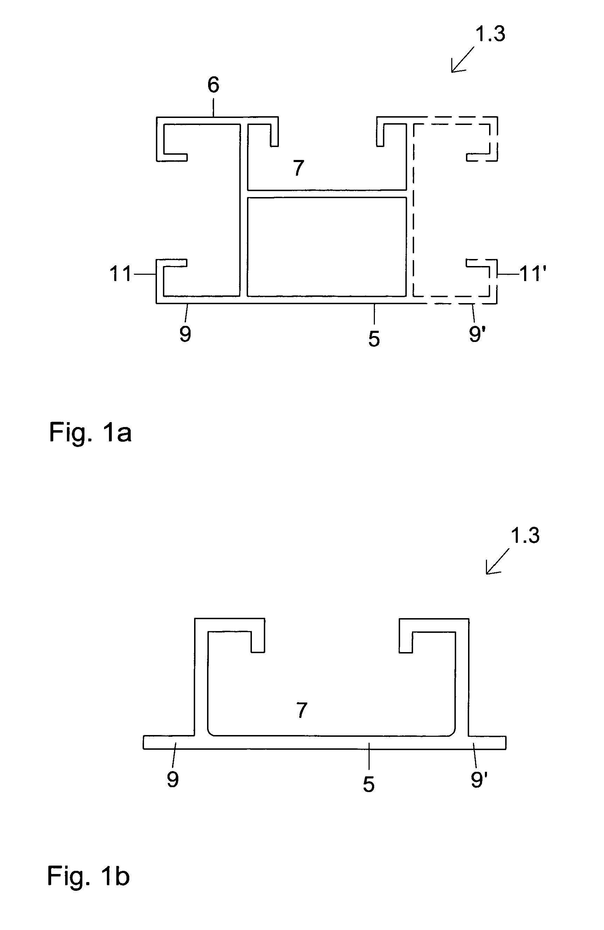

In den Figuren 1a ist eine sowohl als Trägerschiene 1 als auch als Modulschiene 3 verwendbare Profilleiste im Querschnitt dargestellt. Die Profilleiste weist unten eine ebene Basisplatte 5 auf und auf ihrer gegenüberliegenden Oberseite 6 eine T-Nut 7.

Bei der Profilleiste nach der Figur 1 a ist unten an der Basisplatte 5 eine Schulter 9 angesetzt, die in dieser Ausführungsform entsprechend der verwendeten Klammer eine hakenförmige Gestalt hat, wodurch die Schulter 9 also einen Haken 11 bildet. In der gestrichelt gezeichneten Variante der Profilleiste ist auf der anderen Seite ebenfalls eine Schulter 9' gezeigt, die einen zweiten Haken 11' bildet. Um die Profilschiene für weitere Zwecke universell verwenden zu können, sind die Schultern 9,9' mit ihren Haken 11,11' Teil von zwei weiteren T-Nuten 7' und 7", die jeweils entlang der linken und rechten Seitenfläche der Profilschiene verlaufen.

Die Figur 1b zeigt einen Querschnitts durch eine einfache Form einer Profilleiste, bei der die Schultern 9,9' als Verlängerung der Basisplatte 5 ausgeführt sind.

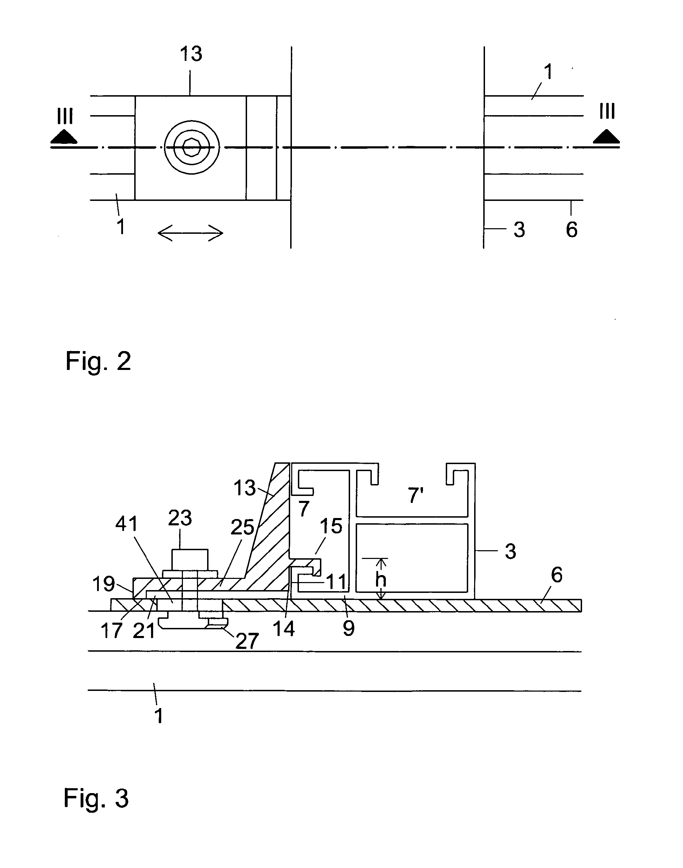

Bezug nehmend auf die Figur 2 ist die Aufsicht auf eine Trägerschiene 1 gezeigt, auf welcher im rechten Winkel eine Modulschiene 3 mit Hilfe einer Klammer 13 befestigt ist, deren Aufbau am besten der Figur 3 zu entnehmen ist. Die Klammer 13 weist an einer Seitenfläche 14 einen hakenförmigen Ansatz 15 auf, dessen Abmessungen so bemessen sind, dass er passgenau ohne allzu viel Spiel in den Haken 11 der Schulter 9 eingeklinkt werden kann. Das Einklinken geschieht dadurch, dass der Ansatz 15 durch die Nutöffnung geführt und anschließend abgesenkt wird.

An ihrer ansonsten ebenen Unterseite 17 weist die Klammer 13 auf ihrer der Seitenfläche 14 abgewandten Seite einen Steg 19 auf, so dass sich zwischen der Unterseite 17 und der Oberseite 6 der Trägerschiene 1 ein Spalt 21 ausbildet. Dieser Spalt 21 dient dazu, bei einem Anziehen einer Schraube 23 einen Federweg oder Spannweg bereitzustellen, in welchen hinein die Unterseite 17 der Klammer 13 durchgebogen werden kann. Es ist vorteilhaft, den Abstand h des Ansatzes 15 über der Oberseite 6 der Trägerschiene 1 so zu bemessen, dass dieselbe Höhe, die der Steg 19 aufweist, auch auf dieser Seite der Klammer 13 nach dem Einklinken vorliegt.

Die Unterseite 17 der Klammer 13 hat eine rechteckförmige Gestalt, in deren Mitte ein Loch 25 vorgesehen ist, durch welches die Schraube 23 geführt ist. Die Schraube 23 ist an ihrem Ende in einen Nutstein 27 gedreht, der sich nach seiner Einführung in die Nut 7 zunächst mit der Schraube 23 mitdreht und sich bei weiterem Anziehen der Schraube 23 an den T-Stegen der Nut 7 abstützt.

Es ist wichtig für die einseitige Befestigung der Klammer 13, wie sie in den Figuren 2 und 3 gezeigt ist, das eine Sicherung gegen Verdrehen der Modulschiene 3 weg von der Trägerschiene1 vorgenommen wird. Zu diesem Zweck ist die Seitenfläche 14 der Klammer 13 nach oben hin über den Ansatz 15 hinaus verlängert. Die Verlängerung reicht so weit, dass sich die Seitenfläche 14 gegen ein höher gelegenes Teil der Modulschiene 1, hier im Ausführungsbeispiel gegen den zweiten oder oberen T-Arm der T-Nut 9 abstützt, so dass ein Verkippen der Modulschiene 3 nicht möglich ist. Zur besseren Verteilung der in die Seitenfläche 14 eingeleiteten Kräfte ist dieser Teil der Klammer 13 schräg nach unten hin in Richtung der Unterseite 17 der Klammer 13 verstärkt, wie es aus der Figur 3 ersichtlich ist.

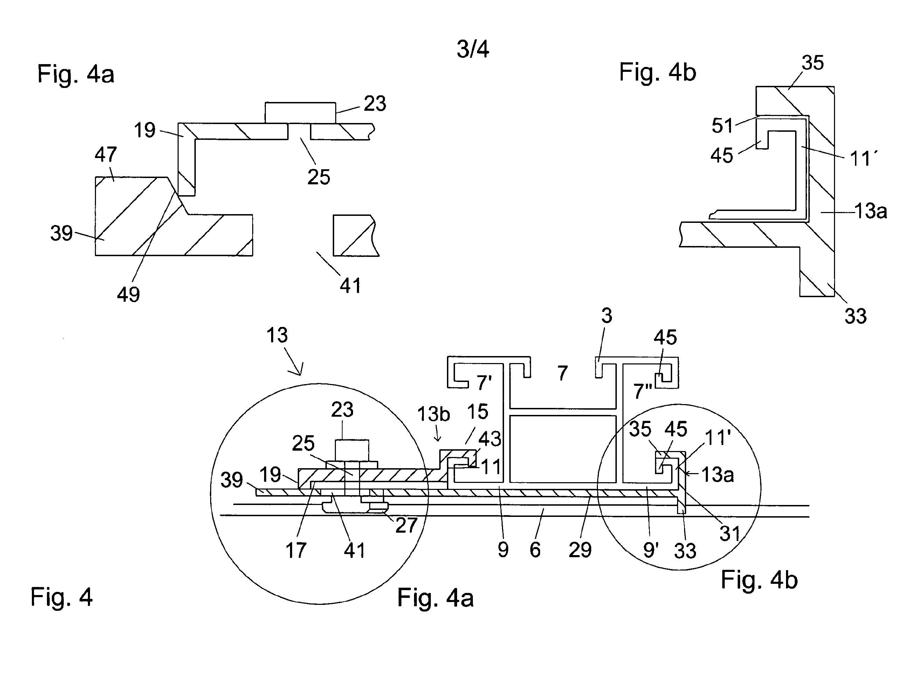

In den Figuren 4, 4a und 4b ist eine zweiteilige Variante der Klammer 13 dargestellt. Bei dieser Variante ist es notwendig, dass eine Trägerschiene 1 mit an beiden Rändern entlang laufender Schulter 9,9' zum Einsatz kommt. Das erste Klammerteil 13a weist einen Basisstreifen 29 auf, an dessen erstes Ende 31 ein nach unten weisender, schwalbenschwanzartiger Steg 33 angeordnet ist. Der Schwalbenschwanzsteg 33 ist ein quer zur Streifenrichtung verlaufender länglicher Steg, der längs zur T-Nut 7 bequem in diese eingeführt werden kann und anschließend nach einer 90° Drehung, wenn der Basisstreifen 29 parallel zur Trägerschiene 3 verläuft quer in der T-Nut 7 liegt und eine ähnliche fixierende Wirkung wie ein Nutstein hat, nur dass er eben nicht durch die Drehung der Schraube 23 weiter verspannt werden kann. Um einen guten Kraftschluss zu erhalten, können die Flanken des Schwalbenschwanzstegs 33, die nach der Drehung an die T-Arme der T-Nut 7 zur Anlage kommen, angeschrägt sein. An der dem Schwalbenschwanzsteg 33 gegenüberliegenden Seite des Basisstreifens 29 ist dieser mit einem ersten hakenförmigen Ansatz 35 versehen, der in die erste hakenförmige Schulter 9' bzw. den ersten Haken 11' eingreift. An der dem ersten Ende 31 gegenüberliegenden Ende 39 des Basisstreifens 29 ist eine Aussparung vorgesehen, die insbesondere ein Langloch 41 ist.

Das zweite Klammerteil 13b ist eine vereinfachte Form der zuvor beschriebenen Klammer 13, die aber ebenfalls wie beschrieben eingesetzt werden kann. Die gemeinsamen Teile des Klammerteils 13 und 13b sind der Ansatz 15, der jetzt in dieser Variante als zweiter Ansatz 43 eingeführt ist und das Loch 25. Die Vereinfachung besteht darin, dass das zweite Klammerteil 13b keine den zweiten Ansatz 43 überragende Seitenfläche mit eventueller Verstärkung braucht, da ein Verkippen der Modulschiene 3 weg von der Trägerschiene 3 durch die Bereitstellung von zwei an gegenüberliegenden Seiten von der Modulschiene 3 befindlichen, hakenförmigen Ansätzen 35 und 43 verhindert wird.

In der Detailansicht nach Figur 4a ist erkennbar, dass das zweite Ende 39 des Basisstreifens 29 mit einer Verdickung 44 versehen ist, die sich von der Oberseite 6 der Trägerschiene 1 nach oben hin erstreckt. An der zur Modulschiene 3 hin gerichteten Seite ist die Verdickung 47 mit einer relativ steilen Flanke 49 versehen, die als Rutschfläche für den Steg 19 dient. Wenn das zweite Klammerteil 13b in Position gebracht ist und die Schraube 23 angezogen wird, gleitet der Steg entlang der Flanke 49 nach unten und verspannt das zweite Klammerteil 13b zwischen der Verdickung 47 und dem Haken 11. Dadurch wird ein strammer Sitz der Klammer 13 erreicht.

Eine gleichwirkende Maßnahme wird durch eine weitere Flanke oder Schräge 51 angestrebt, die sich unten an dem ersten Ansatz 35 des ersten Klammerteils 13a befindet und die in der Figur 4b ersichtlich ist. Auch hier wird eine Keilwirkung erzielt, wenn der zweite Haken 11' unter die Schräge 51 geschoben wird. Wurde durch die in der Figur 4a beschriebene Maßnahme eine Klemmwirkung parallel zur Oberseite 6 der Trägerschiene 1 erzielt, so stellen die Maßnahmen nach der Figur 4b eine Klemmwirkung senkrecht zur Oberfläche 6 bereit: Die Modulschiene 3 wird in senkrechter Richtung gegen die Trägerschiene 1 angedrückt.

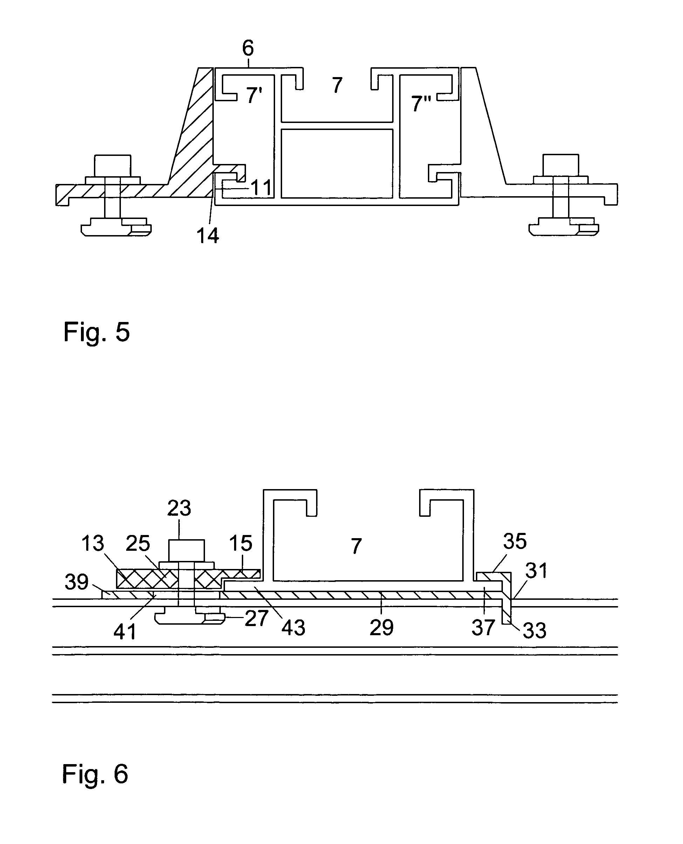

In der Figur 5 ist noch die Variante der Figuren 2 und 3 bei Einsatz in Verbindung mit der Modulschiene 3 nach der Figur 4 oder Figur 1 a in gestrichelter Ausführung gezeigt. Die links im Schnitt dargestellte Klammer 13 ist auf der als nächstes folgenden, benachbarten Trägerschiene auf der rechten Seite montiert. Die Klammern 13 werden also immer abwechselnd rechts und links montiert, um auch bei einseitig fixierender Klammer 13 ein Verkippen der Modulschiene 3 gegenüber der Trägerschiene 1 zu minimieren.

In der Figur 6 ist eine Variante mit vereinfachter Modulschiene 3 gemäß der Figur 1b gezeigt. Die Schultern 37 und 43 sind als Fortsatz des Basisstreifens 29 ausgeführt. Der erste Ansatz 35 ist weiterhin hakenförmig ausgebildet, wohingegen der zweite Ansatz 15 lediglich eine Verlängerung an der Klammer 13 darstellt. Der Montageaufwand ist im wesentlichen identisch zu der aufwändigeren Variante nach der Figur 4, der Materialeinsatz ist aber geringer, was für Photovoltaikanlagen ausreichen mag, die zum einen relativ klein sind, wie Dachanlagen, und/oder wo nur mit geringen Kräften zu rechnen ist.

### Bezugszeichenliste

- 1: Trägerschiene
- 3: Modulschiene
- 5: Basisplatte
- 6: Oberseite Trägerschiene
- 7,7',7": T-Nut
- 9,9': Schulter 11,11' Haken
- 13: Klammer
- 13a: erstes Klammerteil
- 13b: zweites Klammerteil
- 14: Seitenfläche
- 15: Ansatz
- 17: Unterseite Klammer
- 19: Steg
- 21: Spalt
- 23: Schraube
- 25: Loch
- 27: Nutstein
- 29: Basisstreifen
- 31: 1. Ende Basisstreifen
- 33: Hammerkopfsteg
- 35: erster Ansatz
- 37: erste hakenförmige Schulter
- 39: 2. Ende Basisstreifen
- 41: Langloch
- 43: zweite hakenförmige Schulter
- 45: Verstärkungssteg
- 47: Verdickung
- 49: Flanke
- 51: Schräge

## Patentansprüche

1. Klemmverbindung zur insbesondere rechtwinkeligen Verbindung einer Modulschiene (3) für Photovoltaikmodule mit einer Trägerschiene (1), wobei die Trägerschiene (1) auf ihrer Oberseite (6) eine T-Nut (7) aufweist, und wobei die Modulschiene (3) eine zur Auflage auf die Trägerschiene (1) vorgesehene Basisplatte (5) aufweist, an deren zumindest einem Rand eine den Rand entlanglaufende, insbesondere hakenförmige Schulter (9) ausgebildet ist, **dadurch gekennzeichnet, dass** die Klemmverbindung mittels einer einzigen Schraube (23), die am oberen Ende frei zugänglich ist und am unteren Ende mit einem in die T-Nut (7) eingreifenden Nutstein (27) versehen ist, in Zusammenwirkung mit einem Klammerteil (13), das einen als Gegenhaken zur Schulter (9) fungierenden hakenförmigen Ansatz (15) aufweist, der an der Schulter (9) kraftschlüsssig anbringbar ist, die Modulschiene (3) auf der Trägerschiene (1) fixiert, **dadurch gekennzeichnet, dass** der Klammerteil (13) einen Klemmeffekt über eine gesamte Seite der Modulschiene (3) bereitstellt.

2. Klemmverbindung nach Anspruch 1, **dadurch gekennzeichnet, dass** das Klammerteil (13) eine zur T-Nut (7) hin gerichtete, rechteckförmige Unterseite (17) hat, an deren einem Rand ein nach unten gerichteter Steg (19) verläuft und an deren dem Steg (19) gegenüberliegenden Seite auf einer vorgegebenen Höhe der Seitenfläche (14) entlang der hakenförmige Ansatz (15) verläuft, wobei die Seiten fläche (14) senkrecht zu der Oberseite (6) der Trägerschiene (1) verläuft und über den Hakenförmigen Ansatz (15) bis zu einem höher als der Ansatz (15) gelegenen Teil der Modulschiene hinausreicht. ( Fig. 3, Fig. 5)

3. Klemmverbindung nach Anspruch 2, **dadurch gekennzeichnet, dass** der Ansatz (15) entlang einem Rand der Seitenfläche (14) verläuft und an dem gegenüber liegenden Rand ein nach unten gerichteter Steg (19) verläuft.

4. Klemmverbindung nach Anspruch 2 oder 3 **dadurch gekennzeichnet, dass** der, die Seitenfläche (14) bildende Teil der Klammerverbindung an seiner der Seitenfläche (14) gegenüberliegenden Seite schräg nach unten zur rechtförmigen Unterseite (17) hin verstärkt ist.

5. Klemmverbindung nach Anspruch 2, **dadurch gekennzeichnet, dass** die recht-eckförmige Unterseite (17) ein mittig gelegenes Loch (25) zur Durchführung der einzigen Schraube (23) aufweist.

6. Klemmverbindung nach Anspruch 1, wobei an den beiden gegenüberliegenden Rändern der Basisplatte (5) eine erste bzw. eine zweite hakenförmiger Schulter (9,9') ausgebildet ist, **dadurch gekennzeichnet, dass** sie zweiteilig ausgebildet, wobei
- das erste Teil (13a) einen Basisstreifen (29) darstellt, auf den die Modulschiene (3) quer zur Streifenrichtung montierbar ist, und der an einem Ende (31) an seiner Unterseite mit einem hammerkopfartigen Steg (33) zum Eingriff in die T-Nut (7) der Trägerschiene (1) und an der dem Steg (33) gegenüberliegenden Oberseite mit dem ersten Gegenhaken (35) versehen ist, und der an seinem anderen Ende (39) mit einer länglichen Aussparung (41) versehen ist, und
- das zweite Teil (13b) ein Klammerteil darstellt, das einen zweiten Gegenhaken oder hakenförmigen Ansatz (15) aufweist, der an der zweiten Schulter (9) formschlüssig einschiebbar ist, wobei das zweite Teil (13b) ein Loch (25) zur Durchführung der einzigen Schraube (23) aufweist, und entlang der Aussparung (41) verschiebbar angeordnet ist.

7. Klemmverbindung nach Anspruch 6, **dadurch gekennzeichnet, dass** die Aussparung ein Langloch (41) ist, welches in Streifenrichtung verläuft.

8. Klemmverbindung nach Anspruch 6 oder 7, **dadurch gekennzeichnet, dass** das Klammerteil (13) eine zur T-Nut (7) hin gerichtete, rechteckförmige Unterseite (17) hat, die an einem der Ränder einen nach unten gerichteten Steg (19) aufweist.

9. Klemmverbindung nach einem der Ansprüche 6 bis 8, **dadurch gekennzeichnet, dass** an ihrer dem Steg (19) abgewandten Seite auf einer vorgegebenen Höhe (h) der Seitenfläche (14) entlang der hakenförmige Ansatz (15) verläuft.

10. Klemmverbindung nach einem der Ansprüche 1 bis 9, **dadurch gekennzeichnet, dass** die Modulschiene (3) und die Trägerschiene (1) rechteckförmig sind und die T-Nut (7) in einer Grundfläche verläuft und je eine weitere T-Nut (7',7") gleichen Querschnitts entlang den Seitenflächen verläuft.

11. Klemmverbindung nach einem der Ansprüche 1 bis 10, **dadurch gekennzeich-net, dass** die T-Nut(en) (7,7',7") an ihren die schlitzförmige Öffnung bildenden Rändern mit einem Verstärkungssteg (45) versehen ist(sind).

12. Klemmverbindung nach einem der Ansprüche 1 bis 11, **dadurch gekennzeich-net, dass** die Modulschiene (3) und die Trägerschiene (1) identisch ausgeführt sind.

13. Klammer zur Verwendung bei einer Klemmverbindung nach einem der Ansprüche 1 bis 5, **dadurch gekennzeichnet, dass**
- die Klammer einen hakenförmigen Ansatz (15) aufweist, der in eine hakenförmige Schulter (9,11) einhakbar ist,
- an ihrer ansonsten ebenen Unterseite (17) ein nach unten gerichteter Steg (19) verläuft, und der hakenförmiger Ansatz (15) an der dem Steg (19) gegenüberliegenden Seite auf einer vorgegebenen Höhe (h) an ihrer senkrecht zur Unterseite (17) verlaufenden Seitenfläche (14) entlang verläuft, und dass
- die Seitenfläche (14) über den hakenförmigen Ansatz (15) hinausreicht.

14. Klammer zur Verwendung bei einer Klemmverbindung nach einem der Ansprüche 1 bis 9, **dadurch gekennzeichnet, dass** sie zweiteilig ausgebildet ist, wobei
- das erste Teil (13a) einen Basisstreifen (29) darstellt, auf den die Modulschiene (3) quer zur Streifenrichtung montierbar ist, und der an einem Ende (31) an seiner Unterseite mit einem hammerkopfartigen Steg (33) zum Eingriff in eine T-Nut (7) geeignet ist und an der dem Steg (33) gegenüberliegenden Oberseite mit einem ersten hakenförmigen Ansatz (35) zum formschlüssigen Eingriff in eine erste hakenförmige Schulter (37) versehen ist, und der an seinem anderen Ende (39) mit einer länglichen Aussparung (41) versehen ist, und
- das zweite Teil (13b) ein Klammerteil darstellt, das einen zweiten hakenförmigen Ansatz (15) zum kraftschlüssigen Eingriff in eine zweite hakenförmige Schulter (9,11) aufweist, wobei das zweite Teil (13b) ein Loch (25) zur Durchführung der einzigen Schraube (23) aufweist, und entlang der Aussparung (41) verschiebbar angeordnet ist.

15. Klammer nach einem der Ansprüche 13 oder 14, **dadurch gekennzeichnet, dass** sie, bzw. jeweils ihr erstes und zweites Teil einstückig ausgebildet sind.
